# EUROPÄISCHE PATENTSCHRIFT

(11) **EP 3 121 492 B1**
(45) Veröffentlichungstag und Bekanntmachung des Hinweises auf die Patenterteilung: **06.03.2019**
(21) Anmeldenummer: 16170316.0
(22) Anmeldetag: 19.05.2016
(51) Int. Cl.: F16K 11/02, F02D 9/14, F02M 26/70

(54) **VORRICHTUNG ZUR GASSTROMLEITUNG**
DEVICE FOR GAS FLOW GUIDANCE
DISPOSITIF D'ALIMENTATION EN GAZ

(30) Priorität: 24.07.2015 DE 102015214072
(43) Veröffentlichungstag der Anmeldung: 25.01.2017
(73) Patentinhaber: Volkswagen Aktiengesellschaft, 38440 Wolfsburg (DE)
(72) Erfinder: Gottschling, Martina, 38106 Braunschweig (DE); Wendenburg, Stefan, 38550 Isenbüttel (DE); Resch, Stefan, 38444 Wolfsburg (DE); Brömer, Arne, 38531 Rötgesbüttel (DE)

(56) Entgegenhaltungen:
- EP-A2- 1 335 158
- WO-A1-03/098026
- DE-A1-102007 048 297

## Beschreibung

Die Erfindung betrifft ein Ventil, welches eine Ventilhausung, einen Ventilkörper und mindestens ein Dichtelement aufweist. In der Ventilhausung ist ein Hauptzweig und ein Nebenzweig ausgebildet, die Ventilhausung weist hierbei zumindest eine Durchbrechung, der Hauptzweig einen Hauptströmungskanal mit einem Einlass und einem Auslass und der Nebenzweig zwei Nebenströmungskanäle auf. Die Nebenströmungskanäle sind quer zu dem Hauptströmungskanal in dessen Längsrichtung beabstandet angeordnet und einseitig mit dem Hauptströmungskanal verbunden. In einer ersten Endposition des Ventilkörpers ist der Nebenzweig verschlossen und der Hauptzweig geöffnet, in einer zweiten Endposition des Ventilkörpers der Nebenzweig geöffnet, der Hauptzweig geschlossen und der Ventilkörper ist zwischen den zwei Endpositionen translatorisch beweglich ausgeführt.

Die Reduzierung des Kraftstoffverbrauches sowie des Schadstoffausstoßes, insbesondere des Kohlendioxidausstoßes, stellt sich als bis dato viel beachtetes Feld im Bereich des Kraftfahrzeugbaus dar.

Die Lösungsansätze hierfür sind mannigfaltig. Beispielsweise werden Maßnahmen zur Reduzierung der innermotorischen Reibung oder auch zur Optimierung des Verbrennungsprozesses mit unter anderem in möglicher Kombination mit der Verringerung der Hubraum- und Motorengröße ergriffen. Bekannt in diesem Zusammenhang sind z. B. die Kraftstoffdirekteinspritzung sowie das sogenannte Motorendownsizing zur Effizienzsteigerung, wobei im Falle des Downsizings im Rahmen der Verkleinerung des Motors in der Regel zusätzlich Abgasturbolader in den Abgasstrang eines Kraftfahrzeuges eingefügt werden. Diese finden in Kraftfahrzeugen mit Otto- sowie heutzutage in nahezu allen Kraftfahrzeugen mit Dieselmotor Anwendung.

Viele der zur Reduzierung des Kohlendioxidausstoßes gewählten Maßnahmen haben dabei eine Senkung der Abgastemperatur zur Folge.

Durch die bei der, trotz optimierter Verbrennung des Treibstoffes entstehenden Verbrennungsschadstoffe wie beispielsweise Partikel, unverbrannte Kohlenwasserstoffe, Stickoxide oder Kohlenstoffmonoxid, bedarf es einer Abgasnachbehandlung der entstehenden Verbrennungsabgase. Hierfür existieren mehrere Möglichkeiten, wobei unter anderem Partikelfilter, Oxidationskatalysatoren, Stickoxid-Speicherkatalysatoren, Abgasrückführsysteme zur Minimierung der Stickoxid-Entstehung sowie geregelte Dreiwegekatalysatoren eingesetzt werden können.

Zum effizienten Betrieb eines Kraftfahrzeugkatalysators, d. h. einer möglichst hohen Umsetzungsrate der entstehenden Verbrennungsschadstoffe, sind bestimmte Temperaturen des Katalysators notwendig, die nach Möglichkeit unverzüglich nach einem Kalt- oder Wiederstart erreicht werden. Die Abnahme der Abgastemperaturen durch die Maßnahmen zur Senkung des Kohlendioxidausstoßes sowie die weitere Abnahme der Abgastemperatur durch die Anordnung eines Fahrzeugkatalysators im Abgasstrang, die in der Regel nach dem Abgasturbolader erfolgt, stellt sich indes jedoch als kontraproduktives Merkmal dar, da sich hierdurch eine verzögerte Aktivität bzw. ein verzögerter Light-Off des Katalysators einstellt. Im Hinblick auf stetig steigende Anforderungen bezüglich der Erfüllung der gesetzlichen Abgasnormen ist dies als deutlich nachteilig zu bezeichnen.

Auf den vorhergehenden Abschnitt bezogen kann man somit als prinzipiell sinnvoll betrachten, den Katalysator im Abgasstrang vor einem vorhandenen Turbolader anzuordnen. Diesbezüglich muss jedoch beachtet werden, dass in bestimmten Betriebszuständen des Motors, beispielsweise unter Volllast, die Abgastemperaturen so hoch werden können, dass sich die katalytische Beschichtung vom Grundkörper des Fahrzeugkatalysators löst und somit thermisch zerstört wird. Diese Tatsachen führen zu der Überlegung zumindest zwei Katalysatoren zu verwenden, einen dieser Katalysatoren vor und einen nach einem Abgasturbolader anzuordnen, wobei der vor dem Abgasturbolader angeordnete Katalysator so ausgeführt ist, dass dieser bedarfsweise in den Abgasstrang zugeschaltet werden kann.

Im Bereich der Abgasrückführung ist es oftmals gewünscht, die rückgeführten Abgase teils oder vollständig einer Kühlung zu unterziehen, um eine Erwärmung der zur Verbrennung notwendigen, angesaugten Luft durch die Abgase zu vermeiden. Durch diese Erwärmung würde sich die Luft ausdehnen und die für die Verbrennung zur Verfügung stehende Luftmasse minimiert werden. Da dies in der Regel unerwünscht ist, kann man es als zweckmäßig ansehen, dass die Möglichkeit einer beeinflussbaren Leitung der Abgase, über beispielsweise einen Wärmetauscher, besteht.

Beide Vorhaben lassen sich z. B. über Ventile realisieren, welche in den Abgasstrang eingebracht werden und den Richtungsverlauf des Abgasstromes beeinflussen. Für diese Aufgabe bestehen verschiedene Ausführungsformen.

Die DE 10 2007 048 297 A1 beschreibt hierzu ein Ventil, insbesondere für einen Abgaskühler eines Verbrennungsmotors in U-Flow-Ausführung. Die Ankopplung des Ventils an den Abgaskühler erfolgt hierbei über zwei Austrittsöffnungen im Ventil in Richtung des Abgaskühlers, wobei eine jeweilige Austrittsöffnung in sich unterscheidenden Ventilstellungen freigegeben wird. Durch eine jeweilige Ventilstellung, die die erste oder entsprechend die zweite Austrittsöffnung freigibt, lässt sich, aufgrund der Austrittsöffnungsgröße, ein unterschiedlich hoher Volumenstrom in den Abgaskühler leiten. Neben diesen Positionen existiert eine geschlossene Stellung des Ventils, in welcher der Ventilteller im Ventilsitz platziert ist und somit der Gasfluss blockiert wird. In einer weiteren Stellung sind die Austrittsöffnungen in Richtung des Abgaskühlers verschlossen, der Gasfluss passiert das Ventil hierbei ohne, abgesehen von einer Leckageströmung, in den Abgaskühler geleitet zu werden. Durch die Gestaltung des Ventilkörpers, welcher über Durchgangskanäle verfügt wird, abgesehen von der geschlossenen Stellung des Ventils, stets der Hauptanteil des Gasflusses an dem Abgaskühler vorbeigeleitet und lediglich ein von der Ventilstellung abhängiger Teilstrom in diesen eingeleitet. Es ist mit dieser Anordnung somit nicht möglich, den gesamten Gasfluss durch den Abgaskühler zu führen.

Die US 2013/0248752 A1 hingegen beschreibt ein Abgasrückführ-Ventil, welches über zwei Einlässe sowie zwei Auslässe verfügt. Über zwei, in einem definierten Abstand auf einem Arm angeordnete, Ventilköpfe, die simultan über einen Aktor bewegt werden, ist es möglich, in einem ersten Abgaspfad, einen ersten Abgasstrom mittels des ersten Ventilkopfes zwischen erstem Einlass und erstem Auslass sowie in einem zweiten Abgaspfad, einen zweiten Abgasstrom mittels des zweiten Ventilkopfes zwischen dem zweiten Einlass und dem zweiten Auslass gleichzeitig zu schalten. Die beiden Ventilköpfe sitzen in einer Verschlussposition in jeweilig zugeordneten Ventilsitzen und sperren somit den jeweiligen Abgaspfad. Die Abgaspfade sind über eine Dichtscheibe voneinander getrennt.

In der US 2010/0116256 A1 ist ein Drehschieberventil beschrieben, an welches ein Kühler angeschlossen ist. Das Ventil verfügt über einen Ein- und einen Auslass sowie über eine erste und eine zweite Abzweigung. Ein- und Auslass sowie erste und zweite Abzweigung stehen senkrecht zueinander, wobei Einlass und zweite Abzweigung sowie Auslass und erste Abzweigung gegenüberliegen. Die Öffnungen sind hierbei radial um ein Mittelteil angeordnet, in dem sich der Drehschieber befindet. Durch Rotation des Drehschiebers lässt sich ein Gasstrom zwischen Ein- und Auslass sowie Einlass und erster Abzweigung umlenken. In beiden Fällen ist es durch eine bestimmte Winkelstellung des Drehschiebers möglich, den Gasstrom ungedrosselt oder gedrosselt durch das Drehschieberventil zu leiten oder diesen zu sperren. Eine Spaltung des Gasstromes ist mittels dieses Drehschieberventils nicht möglich.

Weiterhin sind aus beispielsweise Pkw-Serienanwendungen Klappenventile bekannt, welche unter anderem als Schmetterlingsklappe zur Drosselung des Abgasstromes im Abgasstrang eingesetzt werden. Bei diesen ist es in der Regel jedoch nicht möglich Leckageströme, selbst bei vollständiger Drosselung, zu vermeiden und weisen somit eine ungenügende Dichtigkeit auf, welche unter Umständen durch eine äußerst aufwändige Bearbeitung der Klappensitze verbessert werden kann. Zusätzlich sind diese durch ein nichtlineares Öffnungsverhalten gekennzeichnet, sie benötigen einen großen Bauraum und ihr Einsatz ist bei hohen Abgastemperaturen, z. B. bei einer Anordnung von einem Abgasturbolader, als kritisch anzusehen.

Vor diesem Hintergrund liegt der Erfindung die Aufgabe zugrunde, eine Vorrichtung der eingangs genannten Art derart auszuführen, dass diese eine kompakte Bauweise und somit eine geringe Wärmekapazität aufweist sowie lediglich geringe Leckageströme auftreten können. Weiterhin ist die Vorrichtung derart auszuführen, dass ein die Vorrichtung durchlaufender Gasstrom nicht, teilweise oder vollständig in eine, sich von einer ersten Stromrichtung unterscheidenden, zweite Stromrichtung umgeleitet wird.

Diese Aufgabe wird gelöst mit einer Vorrichtung gemäß den Merkmalen des Patentanspruches 1. Die Unteransprüche betreffen besonders zweckmäßige Weiterbildungen der Erfindung.

Erfindungsgemäß ist also ein Ventil zur Durchleitung eines Gasstroms vorgesehen, welches eine Ventilhausung, einen Ventilkörper und mindestens ein Dichtelement aufweist, wobei in der Ventilhausung ein Haupt- und ein Nebenzweig ausgebildet ist. Die Ventilhausung weist zumindest eine Durchbrechung, der Hauptzweig einen Hauptströmungskanal mit einem Einlass und einem Auslass und der Nebenzweig zwei Nebenströmungskanäle auf. Die Nebenströmungskanäle sind quer zu der Längsrichtung des Hauptströmungskanals, insbesondere sich quer zu der Längsrichtung erstreckend, beabstandet angeordnet, insbesondere zueinander beabstandet, und einseitig mit dem Hauptströmungskanal verbunden, wobei in einer ersten Endposition des Ventilkörpers der Nebenzweig verschlossen und der Hauptzweig geöffnet, in einer zweiten Endposition des Ventilkörpers der Nebenzweig geöffnet und der Hauptzweig geschlossen und der Ventilkörper zwischen den zwei Endpositionen translatorisch beweglich ausgeführt ist. Der Ventilkörper weist hierbei einen Längsschieber und einen Querschieber auf, welche in ihren Flächenebenen orthogonal zu- und aneinander angeordnet sind. Der Verschluss des Nebenzweiges erfolgt in der ersten Endposition des Ventilkörpers durch den Querschieber, wobei der Hauptströmungskanal geöffnet ist, der vollständige Verschluss des Hauptzweiges erfolgt in der zweiten Endposition des Ventilkörpers durch den Längsschieber, wobei in der zweiten Endposition die Nebenströmungskanäle des Nebenzweiges geöffnet sind und der gesamte Gasstrom in der zweiten Endposition durch den Nebenzweig geleitet wird. Quer- sowie Längsschieber können somit beispielsweise eben, flächenhaft und mit einer geringen Dickenausdehnung, insbesondere plattenartig, ausgeprägt sein. Die Schieberelemente können hierbei so aneinander angeordnet sein, dass beispielhaft der Längsschieber senkrecht zu sowie einseitig des und mittig an dem Querschieber angebunden ist und sich durch diese Anordnung somit z. B. eine T-förmige Ausgestaltung des Ventilkörpers ergibt. Weiterhin ist auch eine außermittige Positionierung des Längsschiebers denkbar. Die Anordnung der Querschieberebene erfolgt in Richtung des Hauptströmungskanals, die Anordnung der Längsschieberebene senkrecht dazu in Richtung der Nebenströmungskanäle. Befindet sich der Ventilköper zum Beispiel in seiner ersten Endposition, verschließt der Querschieber simultan beide Nebenströmungskanäle des Nebenzweiges durch einseitiges Abdecken der Ein- und/oder Auslassbereiche dieser Nebenströmungskanäle und ein in das Ventil eingeleiteter Gasstrom kann dieses vom Einlass in Richtung Auslass des Hauptzweiges nahezu ungehindert durchströmen. Befindet sich der Ventilköper hingegen beispielsweise in der zweiten Endposition wird der Hauptströmungskanal durch den Längsschieber versperrt und dieser dient quasi als Scheidewand für einen in das Ventil eingeleiteten Gasstrom, welcher zunächst durch den Einlass in den Hauptströmungskanal eintritt, diesen teilweise durchläuft und über den Längsschieber in Richtung eines der Nebenströmungskanäle des Nebenzweiges umgeleitet wird. Dieser Gasstrom kann unter Umständen anschließend in den zweiten Nebenströmungskanal rückgeführt werden, erneut über den Längsschieber in den Hauptströmungskanal umgelenkt, diesen wiederum teilweise durchlaufen und über den Auslass wieder verlassen. Ein solch ausgebildetes Ventil ermöglicht eine kompakte Bauweise mit einer, durch die Kompaktheit gegebene, geringe Wärmekapazität und kann beispielhaft in den Abgasstrang eines Kraftfahrzeuges eingebracht werden sowie darin zum gezielten Leiten eines Abgasstromes verwendet werden.

In einer besonders vorteilhaften Weiterbildung des Ventils erfolgt in einer teiloffenen Position des Ventilkörpers, in welcher der Ventilkörper zwischen den zwei Endpositionen stufenlos anordenbar ist, weder ein Verschluss des Hauptströmungskanals des Hauptzweiges, noch der Nebenströmungskanäle des Nebenzweiges. Der Ventilkörper befindet sich ferner somit in einer Position, die variabel zwischen beiden Endpositionen gelagert sein kann. Dies hat den Vorteil, dass Haupt- sowie Nebenströmungskanäle geöffnet sind sowie durch die Positionierung des Ventilkörpers zwischen den Endpositionen und die im vorhergehenden Abschnitt beschriebene Ausgestaltung des Ventilkörpers mittels Quer- und Längsschieber eine positionsabhängige Teilung eines in das Ventil eingeleiteten Gasstromes ermöglicht werden kann. Hierbei durchströmt ein Teil des Gasstromes den Hauptströmungskanal, ein zweiter Teil wird in einen der Nebenströmungskanäle umgelenkt. Die jeweiligen Anteile ergeben sich aus der entsprechenden Position des Ventilkörpers zwischen den beiden Endpositionen.

Weiterhin stellt es sich als besonders zweckdienlich dar, wenn die Ventilhausung in einem Bereich zwischen den Nebenströmungskanälen des Nebenzweiges eine Ausnehmung aufweist, die so ausgeformt ist, dass der Längsschieber des Ventilkörpers in dieser Ausnehmung zumindest teilweise gleitend gelagert anordenbar ist und eine translatorische Verschiebung des Ventilkörpers zwischen den zwei Endpositionen ermöglicht wird. Durch diese vorteilhafte Weiterbildung wird es beispielsweise ermöglicht, dass der Längsschieber nicht in einen der Nebenströmungskanäle eingreift, wenn eine translatorische Bewegung des Ventilkörpers in Richtung der Nebenströmungskanäle erfolgt. Der Längsschieber wird somit ferner zwischen den Nebenströmungskanälen geführt und die Ausnehmung kann so ausgestaltet sein, dass der Längsschieber über seine gesamte Länge in die Ausnehmung eintauchen und geführt werden kann.

In einer weiteren vorteilhaften Ausführungsform weist der Ventilkörper ein Betätigungselement auf, welches sich zumindest abschnittsweise außerhalb der Ventilhausung erstreckt, dieses am Querschieber, an einer dem Längsschieber gegenüberliegenden Seite des Querschiebers, mit seiner Längsachse in Richtung einer Verschiebung des Ventilkörpers, angeordnet und sich somit in einer teiloffenen Position oder der ersten Endposition des Ventilkörpers zumindest abschnittsweise in den Hauptströmungskanal des Hauptzweiges erstreckt und so ausgeformt ist, dass es diesen nicht vollständig verschließt. Da bespielhaft eine Anordnung eines Stellgliedes innerhalb der Ventilhausung aufgrund der möglicherweise hohen Temperaturen und des Platzbedarfes als weniger vorteilhaft angesehen werden kann, kann es als sinnvoll betrachtet werden, dass zur Betätigung des Ventilkörpers ein Betätigungselement an diesem angeordnet ist, welches sich zumindest teilweise in den Bereich außerhalb der Ventilhausung erstreckt und somit die Verschiebung des Ventilkörpers von außen erfolgen kann. Es sind mehrere Anordnungsmöglichkeiten für das Betätigungselement, welches beispielsweise als Stift oder Stange ausgebildet sein kann, denkbar. Es ist möglich, dass die Anordnung z. B. am Querschieber erfolgt, wobei das Betätigungselement hierbei durch den Hauptströmungskanal nach außen verläuft. Weiterhin ist eine Anordnung am Längsschieber in Richtung der Ventilkörperverschiebung oder quer dazu möglich, wobei das Betätigungselement innerhalb der Ausnehmung zwischen den Nebenströmungskanälen verlaufen und in Verschiebungsrichtung oder seitlich aus der Ventilhausung austreten kann.

Werden die Nebenströmungskanäle des Nebenzweiges über in der Ventilhausung angeordnete Profileinsätze gebildet und sind diese so zueinander beabstandet angeordnet, dass der Längsschieber des Ventilkörpers in dem Bereich zwischen den Profileinsätzen gleitend gelagert anordenbar ist, so ist dies als besonders vorteilhaft anzusehen. Durch dieses Vorgehen lässt sich unter anderem eine Vereinfachung der Fertigung mittels des mehrteiligen Aufbaus und beispielsweise eine Variabilität der Nebenströmungskanalquerschnitte erreichen. Als vorteilhaft stellt sich dar, wenn die Profileinsätze insbesondere beabstandet, beispielsweise über einen Abstandhalter, eingebracht werden. Somit kann auf einfache Art und Weise die Aufnahme des Längsschiebers zwischen den Nebenströmungskanälen realisiert werden. Die Profileinsätze können in der Ventilhausung z. B. mittels Kraft- oder Formschluss angeordnet sein.

Eine vorteilhafte Weiterbildung des Ventils ist dadurch bestimmt, dass das mindestens eine Dichtelement eine Durchbrechung aufweist, dieses in der mindestens einen Durchbrechung der Ventilhausung angeordnet ist und das Betätigungselement in der Durchbrechung des Dichtelementes gleitend gelagert angeordnet oder das mindestens eine Dichtelement in der Ausnehmung im Bereich zwischen den Nebenströmungskanälen bzw. den beabstandet angeordneten Profileinsätzen platziert und der Längsschieber des Ventilkörpers in der Durchbrechung des Dichtelementes gleitend gelagert angeordnet ist. Um einen möglichen Austritt von Teilen der Gasströmung zu minimieren oder zu verhindern, kann es von Vorteil sein, dass in der mindestens einen Durchbrechung der Ventilhausung ein Dichtelement angeordnet ist, welches eine Abdichtung des Innenraumes des Ventils vollziehen kann. Dies kann vor allem vor dem Hintergrund der Durchführung des Betätigungselementes in den Außenbereich des Ventils sinnvoll sein, um im Durchführungsbereich einen Gasaustritt zu minimieren. Hierbei kann das Dichtelement in der mindestens einen Durchbrechung oder zwischen den Nebenströmungskanälen eingebracht sein, je nachdem, ob das Betätigungselement zum einen am Querschieber oder zum anderen am Längsschieber angeordnet ist. Das Dichtelement kann hierbei beispielsweise in Hohlzylinderform oder als Rechteckprofil ausgebildet sein.

Weist der Querschnitt von Haupt- und Nebenströmungskanälen zumindest abschnittsweise eine kreisförmige oder ovale oder rechteckförmige Flächenform auf, so ist dies als äußerst zweckdienlich anzusehen, da sich hierdurch unterschiedliche Gestaltungsmöglichkeiten bezüglich den Abmessungen des Ventils ergeben. Die Querschnitte können hierbei wie dargestellt z. B. zumindest abschnittsweise kreisförmig, oval, rechteckförmig oder auch als Mischform ausgeprägt sein. Vergleicht man beispielhaft einen kreisförmigen Kanalquerschnitt mit einem rechteckförmigen, so kann bei gleichbleibender Kanalquerschnittsfläche durch eine z. B. Verbreiterung des Ventils, der Ventilhub, d.h. die Strecke zwischen beiden Endpositionen, und/oder die Ventilhöhe verringert und somit eine kompaktere Bauweise erzielt werden.

Eine Ausführungsform, die sich als besonders vorteilhaft darstellt, besteht darin, dass an dem Ventil eine Gas-verarbeitende Einheit angeordnet und diese an den Nebenzweig angeschlossen ist, wobei ein erster Nebenströmungskanal des Nebenzweiges als Gaszuführender Kanal und ein zweiter Nebenströmungskanal als Gas-rückführender Kanal dient. Somit können an den Nebenzweig beispielsweise eine vor einem Abgasturbolader angeordnete Abgasreinigungsvorrichtung, wie ein Katalysator, angeschlossen sein und Abgase mittels des Ventils in diesen Katalysator eingeleitet und somit ein Bypass des Abgasstromes geschaffen werden, indem das Abgas, beispielsweise in der zweiten Endposition des Ventilkörpers, über den Haupt- und ersten Nebenströmungskanal in den Katalysator eingeleitet, diesen durchströmt und über den zweiten Neben- sowie den Hauptströmungskanal zurückgeleitet wird. Weiterhin ist es denkbar, dass an den Nebenzweig ein Wärmetauscher beispielsweise im Rahmen einer Abgasrückführung, angeordnet ist.

Eine weitere besonders gewinnbringende Weiterbildung ist darin gegeben, dass in oder an dem Ventilkörper des Ventils, innerhalb oder außerhalb der Ventilhausung ein Sensorelement angeordnet ist, mit welchem die Position des Ventilkörpers zwischen seinen beiden Endpositionen detektierbar ist. Durch die Möglichkeit, die Position des Ventilkörpers zwischen den beiden Endpositionen zu detektieren, lässt sich diese beispielsweise auch definiert einstellen. Hierbei können verschiedene Kriterien für die Positionierung des Ventilkörpers herangezogen werden. Befindet sich das Ventil beispielhaft in einem Abgasstrang eines Kraftfahrzeuges und über dem Nebenzweig des Ventils ist ein Katalysator an diesen Abgasstrang angeschlossen, welcher sich somit vor einem, sich an den Auslass des Ventils anschließenden, Abgasturbolader befindet, kann beispielsweise bei einer notwendigen dynamischen Reaktion des Abgasturboladers aufgrund eines z. B. Beschleunigungsvorganges der Nebenzweig mit angeschlossenem Katalysator verschlossen werden, da durch die Umleitung der Abgase kein oder nur ein geringer Impuls durch diese auf den Abgasturbolader wirkt. Ebenso kann ein Verschluss des Nebenzweiges bei einem zu hohen Temperaturanstieg im Katalysator angewendet werden. Je nach Last oder einen, durch die Abgasumleitung in den Katalysator, eventuell ansteigenden Gegendruck, ist es ferner denkbar, eine Zwischenposition des Ventilkörpers einzustellen.

Wird ferner die translatorische Bewegung des Ventilkörpers mittels eines elektrisch oder pneumatisch betriebenen Stellgliedes realisiert, so kann hierdurch in Zusammenhang mit dem angebrachten Sensorelement zur Bestimmung der Position des Ventilkörpers die beiden Endpositionen bzw. eine gewünschte Zwischenposition eingestellt werden.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
Fig. 1 eine erste schematische Darstellung einer Ausführungsform des Ventils;
Fig. 2 eine zweite schematische Darstellung einer weitergebildeten Ausführungsform des Ventils;
Fig. 3 eine Weiterbildung einer Ausführungsform des Ventils.

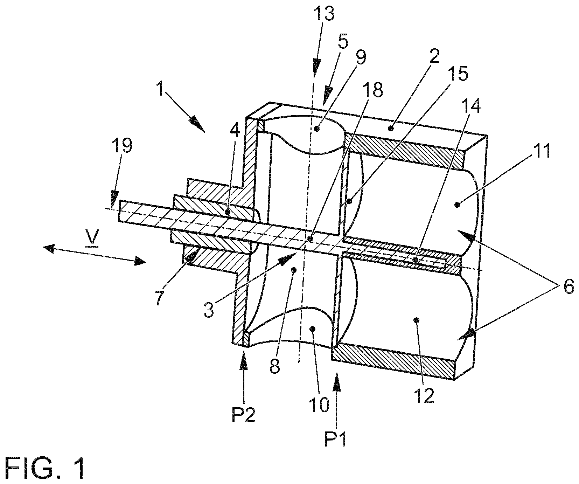

Figur 1 zeigt eine Ausführungsform eines Ventil 1 mit einer Ventilhausung 2, einem Ventilkörper 3 und einem Dichtelement 4, wobei in der Ventilhausung 2 ein Hauptzweig 5 und ein Nebenzweig 6 ausgebildet ist. Die Ventilhausung 2 verfügt über eine Durchbrechung 7, der Hauptzweig 5 weist einen Hauptströmungskanal 8 mit einem Einlass 9 und einem Auslass 10 und der Nebenzweig 6 zwei Nebenströmungskanäle 11, 12 auf. Die Nebenströmungskanäle 11, 12 sind quer zu der Längsrichtung 13 des Hauptströmungskanals 8 beabstandet angeordnet und einseitig mit dem Hauptströmungskanal 8 verbunden. In der ersten Endposition P1 des Ventilkörpers 3 ist hierbei der Nebenzweig 6 verschlossen und der Hauptzweig 5 geöffnet. Der Ventilkörper 3 ist zwischen den zwei Endpositionen P1, P2 translatorisch beweglich ausgeführt und verfügt über einen Längsschieber 14 und ein Querschieber 15, welche in ihren Flächenebenen orthogonal zu- und aneinander angeordnet sind. Der Verschluss des Nebenzweiges 6 in der dargestellten ersten Endposition P1 des Ventilkörpers 3 erfolgt durch den Querschieber 15, wobei der Hauptströmungskanal 8 geöffnet ist. Zusätzlich weist der Ventilkörper 3 ein Betätigungselement 18 auf, welches sich zumindest abschnittsweise außerhalb der Ventilhausung 2 erstreckt. Dieses ist am Querschieber 15, an einer dem Längsschieber 14 gegenüberliegenden Seite des Querschiebers 15, mit seiner Längsachse 19 in Richtung der Verschiebung V des Ventilkörpers angeordnet. Es erstreckt sich somit in der dargestellten ersten Endposition P1 des Ventilkörpers 3 zumindest abschnittsweise in den Hauptströmungskanal 8 des Hauptzweiges 5, wobei es so ausgeformt ist, dass es diesen nicht vollständig verschließt.

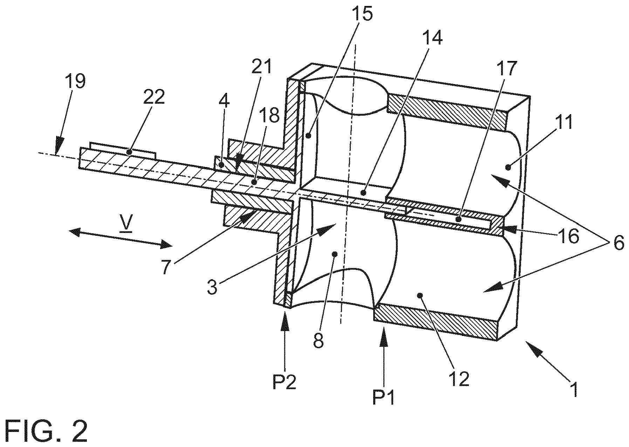

Figur 2 zeigt eine Weiterbildung einer Ausführungsform des Ventils 1, wobei die Ventilhausung 2 in einem Bereich 16 zwischen den Nebenströmungskanälen 11, 12 des Nebenzweiges 6 eine Ausnehmung 17 aufweist, die so ausgeformt ist, dass der Längsschieber 14 des Ventilkörpers 3 in dieser Ausnehmung 17 zumindest teilweise gleitend gelagert anordenbar ist und eine translatorische Verschiebung V des Ventilkörpers 3 zwischen den zwei Endpositionen P1, P2 ermöglicht wird. Der Ventilkörper 3 befindet sich in der zweiten Endposition P2 wobei die Nebenströmungskanäle 11, 12 des Nebenzweiges 6 geöffnet sind und der Hauptströmungskanal 8 durch den Längsschieber 14 verschlossen ist. Der Ventilkörper 3 weist wiederum ein Betätigungselement 18 auf, welches sich zumindest abschnittsweise außerhalb der Ventilhausung 2 erstreckt und dieses am Querschieber 15, an einer dem Längsschieber 14 gegenüberliegenden Seite des Querschiebers 15, mit seiner Längsachse 19 in Richtung der Verschiebung V des Ventilkörpers 3, angeordnet ist. An dem Ventilkörper 3 des Ventils 1, außerhalb der Ventilhausung 2, ist ein Sensorelement 22 angeordnet, wodurch die Position des Ventilköpers 3 zwischen seinen beiden Endpositionen P1, P2 detektierbar ist. Das mindestens eine Dichtelement 4 weist eine Durchbrechung 21 auf und ist in der mindestens einen Durchbrechung 7 der Ventilhausung 2 formschlüssig, das Betätigungselement 18 in der Durchbrechung 21 des Dichtelementes 4 gleitend gelagert angeordnet.

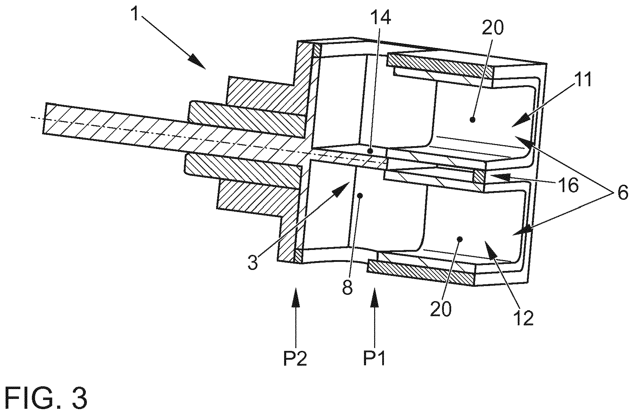

In Figur 3 ist eine weitere vorteilhafte Weiterbildung einer Ausführungsform des Ventils 1 dargestellt in welcher die Nebenströmungskanäle 11, 12 des Nebenzweiges 6 über in der Ventilhausung 2 angeordnete Profileinsätze 20 gebildet werden und diese so zueinander beabstandet angeordnet sind, dass der Längsschieber 14 des Ventilkörpers 3 in dem Bereich 16 zwischen den Profileinsätzen 20 gleitend gelagert anordenbar ist. Der Ventilkörper 3 befindet sich in der zweiten Endposition P2 wobei die Nebenströmungskanäle 11, 12 des Nebenzweiges 6 geöffnet sind und der Hauptströmungskanal 8 durch den Längsschieber 14 verschlossen ist. In dieser Weiterbildung weisen die Strömungskanäle 8, 11, 12 einen rechteckförmigen Querschnitt auf.

### Bezugszeichenliste

- 1: Ventil
- 2: Ventilhausung
- 3: Ventilkörper
- 4: Dichtelement
- 5: Hauptzweig

- 6: Nebenzweig
- 7: Durchbrechung
- 8: Hauptströmungskanal
- 9: Einlass
- 10: Auslass

- 11: Nebenströmungskanal
- 12: Nebenströmungskanal
- 13: Längsrichtung
- 14: Längsschieber
- 15: Querschieber

- 16: Bereich
- 17: Ausnehmung
- 18: Betätigungselement
- 19: Längsachse
- 20: Profileinsätze

- 21: Durchbrechung
- 22: Sensorelement

- P1: Endposition
- P2: Endposition
- V: Verschiebung

## Patentansprüche

1. Ventil (1) zur Durchleitung eines Gasstroms, aufweisend eine Ventilhausung (2), einen Ventilkörper (3) und mindestens ein Dichtelement (4), wobei in der Ventilhausung (2) ein Hauptzweig (5) und ein Nebenzweig (6) ausgebildet ist, die Ventilhausung (2) zumindest eine Durchbrechung (7), der Hauptzweig (5) einen Hauptströmungskanal (8) mit einem Einlass (9) und einem Auslass (10) und der Nebenzweig (6) zwei Nebenströmungskanäle (11, 12) aufweist, die Nebenströmungskanäle (11, 12) quer zu der Längsrichtung (13) des Hauptströmungskanals (8) beabstandet angeordnet und einseitig mit dem Hauptströmungskanal (8) verbunden sind, in einer ersten Endposition (P1) des Ventilkörpers (3) der Nebenzweig (6) verschlossen und der Hauptzweig (5) geöffnet, in einer zweiten Endposition (P2) des Ventilkörpers (3) der Nebenzweig (6) geöffnet, der Hauptzweig (5) geschlossen und der Ventilkörper (3) zwischen den zwei Endpositionen (P1, P2) translatorisch beweglich ausgeführt ist, der Ventilkörper (3) einen Längsschieber (14) und einen Querschieber (15) aufweist, welche in ihren Flächenebenen orthogonal zu- und aneinander angeordnet sind, der Verschluss des Nebenzweiges (6) in der ersten Endposition (P1) des Ventilkörpers (3) durch den Querschieber (15), wobei der Hauptströmungskanal (8) geöffnet ist, und der vollständige Verschluss des Hauptzweiges (5) in der zweiten Endposition (P2) des Ventilkörpers (3) durch den Längsschieber erfolgt, **dadurch gekennzeichnet, dass** in der zweiten Endposition (P2) die Nebenströmungskanäle (11, 12) des Nebenzweiges (6) geöffnet sind und der gesamte Gasstrom in der zweiten Endposition (P2) durch den Nebenzweig geleitet wird.

2. Ventil (1) nach Anspruch 1, **dadurch gekennzeichnet, dass** in einer teiloffenen Position des Ventilkörpers (3), in welcher der Ventilkörper (3) zwischen den zwei Endpositionen (P1, P2) stufenlos anordenbar ist, weder ein Verschluss des Hauptströmungskanals (8) des Hauptzweiges (5), noch der Nebenströmungskanäle (11, 12) des Nebenzweiges (6) erfolgt.

3. Ventil (1) nach den Ansprüchen 1 oder 2, **dadurch gekennzeichnet, dass** die Ventilhausung (2) in einem Bereich (16) zwischen den Nebenströmungskanälen (11, 12) des Nebenzweiges (6) eine Ausnehmung (17) aufweist, die so ausgeformt ist, dass der Längsschieber (14) des Ventilkörpers (3) in dieser Ausnehmung (17) zumindest teilweise gleitend gelagert anordenbar ist und eine translatorische Verschiebung (V) des Ventilkörpers (3) zwischen den zwei Endpositionen (P1, P2) ermöglicht wird.

4. Ventil (1) nach zumindest einem der vorangehenden Ansprüche, **dadurch gekennzeichnet, dass** der Ventilkörper (3) ein Betätigungselement (18) aufweist, welches sich zumindest abschnittsweise außerhalb der Ventilhausung (2) erstreckt, dieses am Querschieber (15), an einer dem Längsschieber (14) gegenüberliegenden Seite des Querschiebers (15), mit seiner Längsachse (19) in Richtung der Verschiebung (V) des Ventilkörpers (3), angeordnet und sich somit in einer teiloffenen Position oder der ersten Endposition (P1) des Ventilkörpers (3) zumindest abschnittsweise in den Hauptströmungskanal (8) des Hauptzweiges (5) erstreckt und so ausgeformt ist, dass es diesen nicht vollständig verschließt.

5. Ventil (1) nach zumindest einem der vorangehenden Ansprüche, **dadurch gekennzeichnet, dass** die Nebenströmungskanäle (11, 12) des Nebenzweiges (6) über in der Ventilhausung (2) angeordnete Profileinsätze (20) gebildet werden und diese so zueinander beabstandet angeordnet sind, dass der Längsschieber (14) des Ventilkörpers (3) in dem Bereich (16) zwischen den Profileinsätzen (20) gleitend gelagert anordenbar ist.

6. Ventil (1) nach Anspruch 4, **dadurch gekennzeichnet, dass** das mindestens eine Dichtelement (4) eine Durchbrechung (21) aufweist, dieses in der mindestens einen Durchbrechung (7) der Ventilhausung (2) angeordnet ist und das Betätigungselement (18) in der Durchbrechung (21) des Dichtelementes (4) gleitend gelagert angeordnet oder das mindestens eine Dichtelement (4) in der Ausnehmung im Bereich (16) zwischen den Nebenströmungskanälen (11, 12) bzw. den beabstandet angeordneten Profileinsätzen (20) platziert und der Längsschieber (14) des Ventilkörpers (3) in der Durchbrechung (21) des Dichtelementes (4) gleitend gelagert angeordnet ist.

7. Ventil (1) nach zumindest einem der vorangehenden Ansprüche, **dadurch gekennzeichnet, dass** der Querschnitt von Hauptströmungskanal (8) und Nebenströmungskanälen (11, 12) zumindest abschnittsweise eine kreisförmige oder ovale oder rechteckförmige Flächenform aufweist.

8. Ventil (1) nach zumindest einem der vorangehenden Ansprüche, **dadurch gekennzeichnet, dass** in oder an dem Ventilkörper (3) des Ventils (1), innerhalb oder außerhalb der Ventilhausung (2) ein Sensorelement (22) angeordnet ist, mit welchem die Position des Ventilkörpers (3) zwischen seinen beiden Endpositionen (P1, P2) detektierbar ist.

9. Ventil (1) nach zumindest einem der vorangehenden Ansprüche, **dadurch gekennzeichnet, dass** die translatorische Verschiebung (V) des Ventilkörpers (3) mittels eines elektrisch oder pneumatisch betriebenen Stellgliedes realisiert wird.

## Claims

1. Valve (1) for conducting a gas flow, having a valve housing (2), a valve body (3), and at least one sealing element (4), wherein a primary branch (5) and a secondary branch (6) are configured in the valve housing (2), the valve housing (2) has at least one cut-out (7), the primary branch (5) has a primary flow duct (8) having an inlet (9) and an outlet (10), and the secondary branch (6) has two secondary flow ducts (11, 12), the secondary flow ducts (11, 12) are disposed so as to be spaced apart transversely to the longitudinal direction (13) of the primary flow duct (8) and on one side are connected to the primary flow duct (8), the secondary branch (6) is closed and the primary branch (5) is opened in a first terminal position (P1) of the valve body (3), the secondary branch (6) is opened and the primary branch (5) is closed in a second terminal position (P2) of the valve body (3), and the valve body (3) is embodied so as to be movable in a translatory manner between the two terminal positions (P1, P2), the valve body (3) has a longitudinal slide (14) and a transverse slide (15) which in terms of the face planes thereof are disposed on one another so as to be mutually orthogonal, the closure of the secondary branch (6) in the first terminal position (P1) of the valve body (3) is performed by the transverse slide (15), wherein the primary flow duct (8) is opened, and the complete closure of the primary branch (5) in the second terminal position (P2) of the valve body (3) is performed by the longitudinal slide, **characterized in that** the secondary flow ducts (11, 12) of the secondary branch (6) are opened in the second terminal position (P2), and the entire gas flow in the second terminal position (P2) is directed through the secondary branch.

2. Valve (1) according to Claim 1, **characterized in that** a closure of neither the primary flow duct (8) of the primary branch (5) nor of the secondary flow ducts (11, 12) of the secondary branch (6) is performed in a partially opened position of the valve body (3) in which the valve body (3) is disposable in a stepless manner between the two terminal positions (P1, P2).

3. Valve (1) according to Claims 1 or 2, **characterized in that** the valve housing (2) in a region (16) between the secondary flow ducts (11, 12) of the secondary branch (6) has a clearance (17) which is shaped such that the longitudinal slide (14) of the valve body (3) is disposable so as to be at least in part mounted in a sliding manner in said clearance (17), and a translatory displacement (V) of the valve body (3) between the two terminal positions (P1, P2) is enabled.

4. Valve (1) according to at least one of the preceding claims, **characterized in that** the valve body (3) has an activation element (18) which at least in portions extends outside the valve housing (2), said activation element (18) is disposed on the transverse slide (15) on a side of the transverse slide (15) that is opposite the longitudinal slide (14) the longitudinal axis (19) of said activation element (18) being in the direction of the displacement (V) of the valve body (3), and said activation element (18) in a partially opened position or the first terminal position (P1) of the valve body (3) at least in portions extends into the primary flow duct (8) of the primary branch (5) and is shaped such that said activation element (18) does not completely close said primary flow duct (8) of the primary branch (5).

5. Valve (1) according to at least one of the preceding claims, **characterized in that** the secondary flow duct (11, 12) of the secondary branch (6) are formed by way of profiled inserts (20) that are disposed in the valve housing (2), and said profiled inserts (20) are disposed so as to be mutually spaced apart such that the longitudinal slide (14) of the valve body (3) is disposable so as to be mounted in a sliding manner in the region (16) between the profiled inserts (20).

6. Valve (1) according to Claim 4, **characterized in that** the at least one sealing element (4) has a cut-out (21), said sealing element (4) is disposed in the at least one cut-out (7) of the valve housing (2), and the activation element (18) is disposed so as to be mounted in a sliding manner in the cut-out (21) of the sealing element (4), or the at least one sealing element (4) is placed in the clearance in the region (16) between the secondary flow ducts (11, 12) or the profiled inserts (20) that are disposed so as to be spaced apart, respectively, and the longitudinal slide (14) of the valve body (3) is disposed so as to be mounted in a sliding manner in the cut-out (21) of the sealing element (4).

7. Valve (1) according to at least one of the preceding claims, **characterized in that** the cross section of the primary flow duct (8) and the secondary flow ducts (11, 12) at least in portions has a circular or oval or rectangular face shape.

8. Valve (1) according to at least one of the preceding claims, **characterized in that** a sensor element (22) by way of which the position of the valve body (3) between the two terminal positions (P1, P2) thereof is detectable is disposed in or on the valve body (3) of the valve (1), within or outside the valve housing (2).

9. Valve (1) according to at least one of the preceding claims, **characterized in that** the translatory displacement (V) of the valve body (3) is implemented by means of the electrically or pneumatically operated actuator.

## Revendications

1. Vanne (1) pour le guidage d'un courant de gaz, présentant un boîtier de vanne (2), un corps de vanne (3) et au moins un élément d'étanchéité (4), dans laquelle une branche principale (5) et une branche secondaire (6) sont formées dans le boîtier de vanne (2), le boîtier de vanne (2) présente au moins une percée (7), la branche principale (5) présente un canal d'écoulement principal (8) avec une entrée (9) et une sortie (10) et la branche secondaire (6) présente deux canaux d'écoulement secondaires (11, 12), les canaux d'écoulement secondaires (11, 12) sont disposés de façon espacée transversalement à la direction longitudinale (13) du canal d'écoulement principal (8) et sont raccordés d'un côté au canal d'écoulement principal (8), dans une première position finale (P1) du corps de vanne (3) la branche secondaire (6) est fermée et la branche principale (5) est ouverte, dans une seconde position finale (P2) du corps de vanne (3) la branche secondaire (6) est ouverte, la branche principale (5) est fermée et le corps de vanne (3) est déplaçable par translation entre les deux positions finales (P1, P2), le corps de vanne (3) présente un tiroir longitudinal (14) et un tiroir transversal (15), qui sont disposés dans les plans de leurs faces perpendiculairement l'un à l'autre et l'un sur l'autre, la fermeture de la branche secondaire (6) dans la première position finale (P1) du corps de vanne (3) est effectuée par le tiroir transversal (15), le canal d'écoulement principal (8) étant ouvert, et la fermeture totale de la branche principale (5) dans la seconde position (P2) du corps de vanne (3) est effectuée par le tiroir longitudinal (14), **caractérisée en ce que** dans la seconde position finale (P2) les canaux d'écoulement secondaires (11, 12) de la branche secondaire (6) sont ouverts et tout le courant de gaz est conduit à travers la branche secondaire dans la seconde position finale (P2) .

2. Vanne (1) selon la revendication 1, **caractérisée en ce que** dans une position partiellement ouverte du corps de vanne (3), dans laquelle le corps de vanne (3) peut être disposé en continu entre les deux positions finales (P1, P2), il ne se produit une fermeture ni du canal d'écoulement principal (8) de la branche principale (5) ni des canaux d'écoulement secondaires (11, 12) de la branche secondaire (6).

3. Vanne (1) selon les revendications 1 ou 2, **caractérisée en ce que** le boîtier de vanne (2) présente dans une région (16) située entre les canaux d'écoulement secondaires (11, 12) de la branche secondaire (6) un évidement (17), qui est formé de telle manière que le tiroir longitudinal (14) du corps de vanne (3) puisse être disposé au moins en partie en agencement glissant dans cet évidement (17) et qu'un déplacement en translation (V) du corps de vanne (3) entre les deux positions finales (P1, P2) soit possible.

4. Vanne (1) selon au moins une des revendications précédentes, **caractérisée en ce que** le corps de vanne (3) présente un élément d'actionnement (18), qui s'étend au moins partiellement à l'extérieur du boîtier de vanne (2), cet élément est disposé sur le tiroir transversal (15), sur un côté du tiroir transversal (15) opposé au tiroir longitudinal (14), avec son axe longitudinal (19) dans la direction du déplacement (V) du corps de vanne (3), et s'étend ainsi dans une position partiellement ouverte ou dans la première position finale (P1) du corps de vanne (3) au moins partiellement dans le canal d'écoulement principal (8) de la branche principale (5) et est formé de telle manière qu'il ne ferme pas entièrement ce dernier.

5. Vanne (1) selon au moins une des revendications précédentes, **caractérisée en ce que** les canaux d'écoulement secondaires (11, 12) de la branche secondaire (6) sont formés par des inserts profilés (20) disposés dans le boîtier de vanne (2) et ceux-ci sont disposés à distance l'un de l'autre de telle manière que le tiroir longitudinal (14) du corps de vanne (3) puisse être disposé en agencement glissant dans la région (16) située entre les inserts profilés (20).

6. Vanne (1) selon la revendication 4, **caractérisée en ce que** ledit au moins un élément d'étanchéité (4) présente une percée (21), celui-ci est disposé dans ladite au moins une percée (7) du boîtier de vanne (2) et l'élément d'actionnement (18) est disposé en agencement glissant dans la percée (21) de l'élément d'étanchéité (4) ou ledit au moins un élément d'étanchéité (4) est placé dans l'évidement dans la région (16) située entre les canaux d'écoulement secondaires (11, 12) ou entre les inserts profilés (20) disposés de façon espacée et le tiroir longitudinal (14) du corps de vanne (3) est disposé en agencement glissant dans la percée (21) de l'élément d'étanchéité (4).

7. Vanne (1) selon au moins une des revendications précédentes, **caractérisée en ce que** la section transversale du canal d'écoulement principal (8) et des canaux d'écoulement secondaires (11, 12) présente au moins partiellement une surface de forme circulaire ou ovale ou rectangulaire.

8. Vanne (1) selon au moins une des revendications précédentes, **caractérisée en ce qu'**un élément de capteur (22), avec lequel la position du corps de vanne (3) entre ses deux positions finales (P1, P2) peut être détectée, est disposé dans ou sur le corps de vanne (3) de la vanne (1), à l'intérieur ou à l'extérieur du boîtier de vanne (2).

9. Vanne (1) selon au moins une des revendications précédentes, **caractérisée en ce que** le déplacement en translation (V) du corps de vanne (3) est réalisé au moyen d'un organe de réglage à commande électrique ou pneumatique.
